# EUROPÄISCHE PATENTSCHRIFT

(11) **EP 0 513 809 B1**
(45) Veröffentlichungstag und Bekanntmachung des Hinweises auf die Patenterteilung: **15.10.1997**
(21) Anmeldenummer: 92108213.7
(22) Anmeldetag: 15.05.1992
(51) Int. Cl.: C10M 175/04, C22B 1/00, B01D 17/02

(54) **Verfahren zur Aufbereitung von in Walzwerksanlagen benutzten Kühl- und/oder Schmiermitteln und hierzu eine Aufbereitungsanlage**
Method for treating cooling fluids and/or lubricants used in rolling mill installations and device therefor
Méthode de traitement des fluides de refroidissement et/ou des lubrifiants utilisés dans des installations de laminage et dispositif à cet effet

(30) Priorität: 15.05.1991 DE 4115819
(43) Veröffentlichungstag der Anmeldung: 19.11.1992
(73) Patentinhaber: SMS SCHLOEMANN-SIEMAG AKTIENGESELLSCHAFT, 40237 Düsseldorf (DE)
(72) Erfinder: Schimion, Werner, W-5912 Hilchenbach 4 (DE); Leineweber, Willi, W-4150 Krefeld (DE)
(74) Vertreter: Valentin, Ekkehard, Dipl.-Ing.

(56) Entgegenhaltungen:
- EP-A- 0 080 589
- DE-A- 2 220 132
- DE-A- 2 743 055
- DE-C- 3 146 809
- GB-A- 615 705
- DATABASE WPIL Week 8949, Derwent Publications Ltd., London, GB; AN 89-362315

## Beschreibung

Die Erfindung betrifft ein Verfahren zur Aufbereitung von ölhaltigem mit Walzenzunder verschmutztem Betriebswasser offener Kühlkreisläufe einer Walzwerksanlage, wobei eine Magnetscheidung von Walzenzunder aus dem Betriebswasser sowie eine Drei-Stofftrennung in Flotationsstufen vorgesehen ist. Die Erfindung betrifft auch eine diesbezügliche Aufbereitungsanlage.

Von Jahr zu Jahr werden an die verschiedenen Bearbeitungsverfahren bei der spanenden sowie bei der spanlosen Umformtechnik höhere Anforderungen bezüglich der Abtragsleistung bzw. der Umformleistung und sehr hohe Anforderungen an die Oberflächengüte der bearbeiteten Produkte gestellt. Die bei der Abtragsleistung bzw. bei der Umformleistung entstehende Wärmeentwicklung muß unter Kontrolle gehalten werden, weshalb in den meisten Fällen eine Kühlung erforderlich ist, um die Temperaturen bei der Bearbeitung konstant zu halten. Bei den geforderten Oberflächengüten muß dafür gesorgt werden, daß die bereits abgetragenen Teilchen schnell und vollständig von der Bearbeitungsstelle entfernt werden. Insbesondere bei der spanlosen Umformtechnik, bspw. in Walzwerksanlagen ist darauf zu achten, daß die Oberflächen in den Bereichen, wo die Umformwerkzeuge, bspw. die Walzen eines Warmwalzgerüstes an dem Werkstück angreifen, keine festen Fremdstoffe aufweisen, da diese sonst in das Walzgut eingewalzt werden und die entsprechende Charge möglicherweise ganz dem Schrott zugeführt werden muß. Die Kühl- und Schmiermittel werden daher ständig mit einem feinen Abrieb aus dem Umformvorgang verunreinigt. Bei den Schmiermitteln entstehen zusätzlich Alterungsprodukte. Da diese Kühl- und Schmiermittel folglich ständig eine Anreicherung mit Abrieb und mit anderen Verschmutzungen erfahren, müssen sie gereinigt werden. Durch eine gute und kontinuierliche Reinigung der Kühlmittel bzw. der Schmiermittel wird nicht nur das Betriebsverhalten und die Lebensdauer dieser Medien erheblich verbessert, sondern insgesamt das Ergebnis der spanenden wie auch der spanlosen Umformtechnik optimiert.

In Technische Mitteilungen, 68. Jahrgang, Heft 7/8, 1975 wird zur Kühlschmierstoffpflege und deren Reinigung sowie zur Altemulsionstrennung eine Aufstellung verschiedener Einzelmaschinen bzw. von einzelnen Trenneinrichtungen angegeben, wie Sedimentationsbecken, Hydrozyklone, Zentrifuge, Separator, Bandfilter, Druckfilter Anschwemmfilter; es werden aber keine Hinweise gegeben, wie diese Einzelmaschinen miteinander wirkungsmäßig in Verbindung stehen müssen, um bspw. in Walzwerksanlagen optimale Reinigungsergebnisse für die dort verwendeten offenen Kühlwasserkreisläufe zu erzielen. Die in dieser Druckschrift gezeigten Schemata einer Anschwemmfilteranlage für die Schleifölreinigung bzw. die dort erläuterten Schemata einer thermischen Emulsionstrennanlage bzw. einer Ultrafiltrationsanlage zur Emulsionstrennung sind auf die Verhältnisse in Walzwerksanlagen nicht anwendbar.

Eine Einrichtung zur Aufbereitung von Verunreinigungen, Rückstände und/oder Alterungsprodukte aufweisenden Flüssigkeiten in Walzwerksanlagen ist aus der DE-A-36 16 426 bekannt. Die verunreinigten zur Kühlung und/oder Schmierung in den Walzwerksanlagen eingesetzten Flüssigkeiten werden zunächst in einem Sammelbehälter gesammelt und von dort mehreren Membranfiltern zugepumpt, die in einem Rückspülkreislauf liegen und zyklisch angesteuert werden. Der Filtratausgang der Membranfilter führt zu einem Vorlaufbehälter, von dem aus die gereinigte Flüssigkeit mittels einer Vorlaufpumpe abziehbar ist und ihrem Verwendungszweck, bspw. dem zu kühlenden Walzwerk, zugeführt wird. Zum Reinigen der bei den Spülvorgängen in den Membranfiltern anfallenden stark verschmutzten Flüssigkeiten ist ein gesondertes Absetzgefäß vorgesehen, auf dessen stark geneigtem Boden sich die Verunreinigungen absetzen und der tiefsten Stelle des Bodens so zugeführt werden, daß sie über einen dort vorgesehenen Abzug abgeführt werden. Im oberen Bereich des Absetzgefäßes sind Überlaufrinnen vorgesehen, in welche die durch Absetzen vorgereinigte Flüssigkeit überfließen kann. Die in den Überlaufrinnen gesammelte Flüssigkeit wird zumindest teilweise und geregelt von einer Pumpe zu den Membranfiltern zurückgepumpt und dient dort als Rückspülmittel zur Reinigung der in den Filtern angeordneten Membranen. Mit einer solchen Aufbereitungsanlage kann die Wasserwirtschaft in Walzwerksanlagen weitgehend automatisiert werden und die bei Walzwerksanlagen charakteristischen offenen Kühlmittelkreisläufe mit deutlich geringen Verlustraten gefahren werden.

Die DE-A-22 20 132 befaßt sich mit einem Verfahren zum Austragen des bei einer Verarbeitung von Stahl anfallenden Sinters aus einer Flüssigkeit. Zu diesem Zweck ist ein Sedimentationsgefäß vorgesehen, in welches Sinter und Flüssigkeit eingeleitet wird. Am Boden des Sedimentationsgefäßes sammelt sich der grobe Sinter, der aus der Flüssigkeit ausfällt. Dieser grobe Sinter wird vom Boden des Sedimentationsgefäßes mittels eines Magnetbandes ausgetragen. Der in der Flüssigkeit schwebende Feinstsinter wird zusammen mit der Flüssigkeit am Überlauf des Sedimentationsgefäßes abgezogen und in ein Zwischenbecken eingeleitet. In dem Zwischenbecken befindet sich eine Feinstsinterkammer, die durch ein Wehr von der Reinwasserkammer abgetrennt ist. Aus dem unteren Bereich der Feinstsinterkammer wird mittels einer Pumpe die Trübe in einen Hydrozyklon eingeleitet. In dem Hydrozyklon findet eine Zwei-Stofftrennung in der Weise statt, daß am Überlauf des Zyklons Reinwasser abgezogen wird und in die Reinwasserkammer zurückgeleitet wird. Aus dem Unterlauf des Zyklons wird Wasser mit Feinstsinter abgezogen und in das Sedimentationsgefäß dort eingeleitet, wo das Magnetband angeordnet ist. Dieses vorbekannte Aufbereitungsverfahren für das Betriebswasser einer Walzwerksanlage sieht nur eine Zwei-Stofftrennung vor, nämlich die Trennung des bei der Verarbeitung von Stahl anfallenden Sinters aus einer Flüssigkeit. Dieses vorbekannte Verfahren befaßt sich nicht mit der zusätzlichen Abtrennung von Öl oder sonstigen fetthaltigen Stoffen aus dem Betriebswasser.

Die GB-A-615 705 befaßt sich mit einem Verfahren zur Ausscheidung von Fremdpartikeln aus Schmiermitteln, die zugleich Kühlmittel sind. Zur Aufbereitung der Kühlmittel wird in einem Beispiel vorgeschlagen, magnetische Felder zu benutzen, um magnetisierbares Material aus dem Flotationsschaum einer Flotationsmaschine zu entfernen. Es wird erwähnt, daß das gesamte Schmiermittel bzw. Kühlmittel vor einer Flotationsstufe über einen magnetischen Separator geführt werden kann und daß dann die Flotationsstufe angewendet werden kann. Weiter heißt es, daß die Kombination von magnetischem Separator und Flotation besonders dann von Vorteil ist, wenn das Kühlmittel bzw. Schmiermittel mit magnetisierbarem Material und mit nicht magnetisierbarem Material verunreinigt ist. Dieses vorbekannte Aufbereitungsverfahren enthält lediglich allgemeine Hinweise, ohne Details für einzelne Verfahrensschritte oder für einen Aufbereitungsstammbaum anzugeben.

Ausgehend von einem solchen Aufbereitungsverfahren und Reinigungsanlage für die Kühlmittel bzw. für die Schmiermittel in Walzwerksanlagen ist es die Aufgabe der vorliegenden Erfindung, die Abscheidung von Walzenzunder sowie Öl und Fett aus dem benutzten Betriebswasser zu vervollständigen mit Hilfe von platzsparenden und möglichst konstengünstigen Einrichtungen, so daß nicht nur das gereinigte Wasser als hochreines Betriebswasser in die Walzwerksanlage zurückgeführt werden kann, sondern auch das Öl/Fett nach einer Altölaufbereitung weiterverwendet werden kann und der abgetrennte Walzenzunder ohne weiteres verhütet werden kann.

Die Lösung der obengenannten Aufgabe gelingt mit dem Verfahrensanspruch 1 sowie mit den beanspruchten Merkmalen für eine Aufbereitungsanlage gemäß dem Patentanspruch 6.

Nach Anspruch 1 zeichnet sich das Verfahren zur Aufbereitung des Betriebswassers offener Kühlkreisläufe einer Walzwerksanlage gemäß der eingangs genannten Gattung dadurch aus, daß der grobe Walzenzunder mittels Schwerkraft-Sedimentation von dem verunreinigten Betriebswasser getrennt wird, daß aus dem auf diese Weise vorgeklärten Betriebswasser die mittleren und feinen Walzenzunderteilchen mittels Magnetscheidung entfernt werden. Das demgemäß nachgeklärte Betriebswasser wird mittels Flotation in Fraktionen getrennt, enthaltend Ölkonzentrat, Wasser und ölarme feinste Walzenzunderpartikel. Die bei der Flotation abgetrennten ölarmen Walzenzunderpartikel werden aufgemahlen und in Wasser suspendiert. Die Suspension wird mittels Nachflotation in Fraktionen getrennt, enthaltend Ölkonzentrat, Wasser und feinste Walzenzunderpartikel. Die einzelne Fraktion wie geklärtes Betriebswasser wird als Kühlmittel wiederverwendet. Der gesamte aus dem Betriebswasser abgetrennte Walzenzunder wird als Sinter verhüttet. Das ölhaltige Konzentrat wird entweder verworfen oder einer Altölaufbereitung unterzogen.

Das beanspruchte Verfahren wird erfindungsgemäß in einer Vorrichtung zur Aufbereitung von ölhaltigem mit Walzenzunder verschmutztem Betriebswasser offener Kühlkreisläufe einer Walzwerksanlage durchgeführt, wobei ein Magnetscheider für den Walzenzunder sowie mindestens ein Flotationsapparat für eine Drei-Stofftrennung vorgesehen ist. Diese Vorrichtung ist nach Anspruch 6 gekennzeichnet durch ein Absetzbecken für die Zuführung von gebrauchtem und verunreinigtem Betriebswasser sowie durch eine Einrichtung zur Entnahme sedimentierten groben Walzenzunders und durch eine Vorrichtung zur Überleitung des vorgeklärten Betriebswassers in ein Pumpenvorlagebecken mit darin installiertem Magnetscheider für mittlere und feine Walzenzunderpartikel. Ferner ist vorgesehen eine Vorrichtung zur Überleitung des nachgeklärten Betriebswassers in mindestens einen Flotationsapparat mit Zwangsbelüftung, deren Fraktionsausgänge mit Transportmitteln versehen sind zur Rückführung der fraktionierten Produkte wie gereinigtes Betriebswasser in den Kühlkreislauf, wobei der Fraktionsausgang des Flotationsapparates für abgetrennte Walzenzunderpartikel mit einer Zerkleinerungsmaschine, insbesondere mit einer Mühle verbunden ist. Der Produktausgang der Mühle steht mit einem Suspensionsbecken in Verbindung, dessen Suspensionsleitung zu einem zweiten Flotationsapparat mit Zwangsbelüftung geführt ist. Ferner sind Vorrichtungen vorgesehen, zur Weitergabe des abgetrennten Walzenzunders in eine Verhüttungsanlage und zur Weiterleitung des ölhaltigen Konzentrats zu einer Altölaufbereitung.

Mit den beanspruchten Maßnahmen gelingt es, das stark mit Feststoffen, vor allen Dingen mit Walzenzunder und ölhaltigen bis fetthaltigen Substanzen durchsetzte Betriebswasser mit vermindertem Kostenaufwand in einer kompakten Aufbereitungsanlage in außerordentlich reine Fraktionen zu trennen, nämlich in Reinwasser, welches als Betriebswasser in den offenen Kühlkreislauf der Walzwerksanlage zurückgeführt werden kann und in Walzenzunder, der von ölhaltigen Substanzen so weitgehend befreit ist, daß dieser unmittelbar auf das Sinterband und in die Verhüttungsanlage gegeben werden kann, ohne jede Gefährdung für die Elektrofilter, die normalerweise einer solchen Anlage nachgeschaltet sind. Das ölhaltige Konzentrat, d.h. die von Feststoffen weitgehend befreite, lediglich gewisse H2O-Anteile bindende Altölemulsion, kann ohne weiteres einer Altölaufbereitung zugeführt werden und kann danach bestimmten Verwendungsarten zugeführt werden. Der wesentliche Vorteil der Erfindung liegt folglich darin, daß die Entstehung der bislang aus den Wasserkreisläufen in Walzwerksanlagen abgeschiedenen ölhaltigen Walzenzunderschlämme vollständig unterbunden wird. Bekanntermaßen stellen diese bei herkömmlichen Reinigungsverfahren anfallenden und bislang deponierten, 20-30% Ölanteile enthaltenden Walzenzunderschlämme erhebliche Umweltbelastungen dar.

Eine deutliche Einsparung an Anlagekosten gelingt mit der Erfindung dadurch, daß in der letzten Stufe der Betriebswasserreinigung anstelle der herkömmlichen Feinstreinigung mit Hilfe von aufwendigen Kiesbettfiltern nunmehr wesentlich billigere Flotationsapparate eingesetzt werden können.

In der Mühle erfolgt u.a. eine mechanische Bearbeitung der Zunderteilchen, wodurch sich anhaftende Ölteilchen gänzlich ablösen oder in dem nachgeschalteten Suspensionsbecken leichter ablösen lassen. Zweckmäßigerweise können dort entsprechende Detergentien wie Tenside oder dergleichen zugesetzt werden. Die so vorbereitete Suspension läßt sich in besonders einfacher Weise mittels der Nachflotation in die genannten drei Fraktionen trennen.

Die überzeugende Wirtschaftlichkeit des erfindungsgemäßen Verfahrens und der beanspruchten Aufbereitungsanlage ist ebenso darin zu sehen, daß der im Bereich 1% bis 3%, bezogen auf den Stahldurchsatz, anfallende Walzenzunder auf Restölgehalte von etwa 0,1% begrenzt wird und quantitativ in den Verhüttungsprozeß zurückgeführt werden kann.

Bei einem gattungsfremden Verfahren gemäß der EP-A 0 080 589 ist zwar vorgeschlagen worden, bei ölverschmutzten Walzenzunderschlämmen die fettigen Substanzen von den Feststoffen dadurch abzulösen, daß die Feststoffe auf Korngrößen unter 1 mm aufgebrochen werden, wobei diese einer festkörpermechanischen Beanspruchung unterworfen werden, dann in einer Flotation gewaschen werden, wobei die zerkleinerten Feststoffe aus der unterläufigen Flotation abgetrennt und entwässernd getrocknet werden und wobei die am Überlauf der Flotation ausgetragene, anschließend von den fettigen Substanzen befreite Überlaufflüssigkeit in den Aufbereitungsprozeß zurückgeführt wird. Es handelt sich hier um die Wiederaufbereitung bereits entstandener Walzenzunderschlämme, die in Deponien lagern. Mit dem erfindungsgemäßen Verfahren wird die Entstehung solcher ölhaltigen Walzenzunderschlämme von vornherein vermieden.

In Ausgestaltung der Erfindung ist vorgesehen, daß das bei der Flotation erhaltene Klarwasser gegebenenfalls gefiltert und anschließend in einem Kühlturm versprüht, gesammelt und an die Verbraucherstellen in der Walzwerksanlage zurückgeführt wird. Anlagentechnisch wird hierzu der Fraktionsausgang des Flotationsapparates für geklärtes Betriebswasser gegebenenfalls mit einem Filter verbunden, dessen Filtratausgang mit einem Kühlturm verbunden ist mit darunter angeordnetem Pumpenvorlagebecken, dessen Pumpe mittels Verbindungsleitungen mit den Kühlwasserverbrauchern in der Walzwerksanlage in Verbindung steht. Die nochmalige Filterung des Klarwassers aus dem Flotationsapparat ist vorteilhafterweise dann angesagt, wenn es zu irgendwelchen Betriebsstörungen mit Feststoffdurchbrüchen an der Flotationszelle kommen sollte. Mit der Versprühung des Klarwassers in einem Kühlturm können große Wassermengen stark heruntergekühlt werden, wie dies in Walzwerksanlagen erforderlich ist, wo bspw. umlaufende Wassermengen von 5000m³/h schnell von etwa 50°C auf 30°C heruntergekühlt werden müssen.

Entsprechend einer Fortbildung des beanspruchten Verfahrens und der Aufbereitungsanlage wird vorgeschlagen, daß das ölhaltige Konzentrat aus der Vorflotation des Betriebswassers und das ölhaltige Konzentrat aus der Nachflotation der Suspension in mehrere Stoffphasen separiert werden, insbesondere in die Fraktionen Altöl, Wasser und geringe Anteile von Walzenzunder getrennt werden; anlagentechnisch gelingt dies dadurch, daß der Fraktionsausgang für das ölhaltige Konzentrat des ersten Flotationsapparates und/oder des zweiten Flotationsapparates mit einer Zentrifuge, insbesondere mit einem Drei-Phasen-Separator mit Austragsöffnungen für gereinigtes Wasser, Altöl sowie Feststoff verbunden ist. Auf diese Weise wird ein fließfähiges Altöl aus dem Wasseraufbereitungsprozeß abgetrennt, welches in Ölfässer abfüllbar ist und ohne weiteres zwischengelagert werden kann, bevor es in einer Altölaufbereitungsanlage transportiert wird, bzw. zur Wiederverwendung im Walzwerk zum Einsatz gelangen kann.

Weitere Maßnahmen und Vorteile der Erfindung sind der nachfolgenden Beschreibung für ein Ausführungsbeispiel zu entnehmen.

Vorab sei folgender technischer Hintergrund erläutert:

Insbesondere in Warmwalzwerken und Stranggießanlagen entstehen die größten Zundermengen dort, wo gleichzeitig große Mengen an offenem Kühlwasser gebraucht werden. Der Walzenzunder entsteht durch Verbindung des Luftsauerstoffs mit dem Eisen. Der Zunder setzt sich aus den verschiedenen Eisenoxidformen FeO, Fe₂O₃ und Fe₃O₄ zusammen. Der Eisengehalt beträgt 70 bis 75%. Zu den Zunderverlusten kommen in Stranggieß- und Walzwerken noch Sägespäne, Brennschneid- und Flämmabbrand hinzu. Bei Stranggießanlagen fällt der Zunder über eine Strecke an, die von der Kokille bis zu den Verladeeinrichtungen reicht. Auf großen Blockstraßen in Warmwalzwerken fällt der Zunder in Form großer Fladen und sogenannter Fische an. Auf Rollgänge und Kühlbetten sind es kleine Platten und Plättchen bis hinab zu Korngrößen von wenigen tausendstel Millimetern. Der in Walzwerken anfallende Zunder beträgt immerhin 1 bis 3 % des durchgesetzten Walzgutes. Das dem Walzprozeß zugeführte Kühlwasser wird vorteilhafterweise gleichzeitig als Transportmittel für den anfallenden Walzenzunder und andere Feststoffe und zum Wegschwemmen der eingesetzten Schmiermittel, etwa 2 Liter Öl bzw. Fett pro Tonne Walzstahl, benutzt. Zum Sammeln des benutzten Betriebswassers sind üblicherweise im Fundament Zunderkanäle angeordnet, die zur Erzielung eines guten Abschwemmeffektes ein entsprechendes Gefälle aufweisen.

Das die Zunderkanäle entlangfließende, stark verunreinigte Betriebswasser W₁ wird außerhalb der eigentlichen Walzwerksanlage gemäß dem Ausführungsbeispiel zunächst in ein Sedimentationsbecken eingeleitet. In dem Sedimentationsbecken 1 erfolgt eine Grobreinigung dadurch, daß sich auf dem Boden des Sedimentationsbeckens die großen Zunderfladen und Zunderfische sowie große Teilchen des Brenn-und Flämmabbrandes ansammeln. In diesem Sedimentationsbecken 1 wird der grobe Walzenzunder Z₁ mit einem mittleren Durchmesser größer 0,5 mm zu etwa 80% durch Schwerkrafteinwirkung aus dem Betriebswasser abgeschieden. Der abgeschiedene grobe Walzenzunder ist ausgesprochen ölarm. Er wird mit Hilfe einer schematisch dargestellten Krananlage 18 von Zeit zu Zeit aus dem Sedimentationsbecken 1 herausgehoben und mittels eines Förderbandes 19 einer Verhüttungsanlage 21 zugefördert.

In einer zweiten Reinigungsstufe durchströmt das im Sedimentationsbecken 1 grob geklärte Betriebswasser anschließend einen in einer nachgeschalteten Pumpenvorlage installierten Magnetscheider 3. In einer möglichst strömungsberuhigten Zone des Pumpenvorlagebeckens 2 werden mit Hilfe des Magnetscheiders die mittleren und feinen Walzenzunderteilchen Z₂ zwischen 0 und 0,5 mm Durchmesser mit einem Abscheidegrad von 50 bis 80% von dem Betriebswasser abgeschieden und oberhalb des Wasserniveaus von dem Magnetscheider abgestreift. Die mittleren und feinen Walzenzunderteilchen können noch als ölarm eingestuft werden und können deshalb zusammen mit dem groben Walzenzunder aus dem Sedimentationsbecken 1 mit Hilfe des Förderbandes 19 der Verhüttungsanlage 21 nach einer Entwässerung in einem Entwässerungsbecken 20 zugeführt werden. Aufgrund des geringen Ölgehaltes im groben Walzenzunder sowie in den durch Magnetscheidung abgeschiedenen mittleren und feinen Walzenzunderteilchen besteht während des Verhüttungsprozesses keine Gefahr für die in solchen Anlagen zur Entstaubung eingesetzten Elektrofilter. Der geringe Anteil an ölhaltigen Substanzen im Walzenzunder Z₁ und Z₂ in den ersten beiden Reinigungsstufen resultiert daraus, daß die Ölphase an solche Walzenzunderpartikeln nicht anlagert ist, die eine relativ große Oberfläche aufweisen. Bei der Überleitung des vorgereinigten Betriebswassers von der ersten Sedimentationsstufe in die zweite Reinigungsstufe mit Magnetabscheidung dürfen deshalb keine nennenswerten Turbulenzen entstehen, so daß die Ölphase sich nicht an den Walzenzunderteilchen anlagern kann.

Das noch mit gewissen Anteilen an feinen Walzenzunderteilchen sowie mit feinsten Walzenzunderpartikeln (Korngröße etwa 0,001 mm) durchsetzte, mit Öl und Fett verschmutzte Betriebswasser wird anschließend aus dem Vorlagebecken 2 über die Pumpen 4 und die Leitung 5 auf einen über Hüttenflur stehenden Flotationsapparat 6 gefördert. In dem Flotationsapparat wird das nachgeklärte Betriebswasser in die Fraktionen Ölkonzentrat, Wasser und ölarme Zunderpartikel getrennt. Um dies zu erreichen, strömen das Betriebswasser und dessen Inhaltsstoffe zwangsgeführt durch den Flotationsapparat, wobei Luft in feinster Dispersion eingetragen wird. An den fein dispergierten Luftblasen lagern sich die in dem Betriebswasser befindlichen feinsten Partikel sowie das Öl und Fett an, um mit diesen gemeinsam aufzuschwimmen. Es fällt ein blasiger Schaum an, der im oberen Bereich der Flotationszelle über einen verstellbaren Ringraum kontinuierlich abgezogen und ausgetragen wird. Zur Unterstützung des Flotationsprozesses können je nach Notwendigkeit verschiedene Reagenzien eingebracht werden. Das so erhaltene Ölkonzentrat fließt über eine Leitung 6.3 in einen Separator 7. In diesem Drei-Phasen-Separator wird das eingeleitete Produkt in die Fraktionen Altöl, Wasser und äußerst geringe Anteile an feinstem Walzenzunder getrennt. Das mit dem Flotationsapparat 6 geklärte Betriebswasser wird durch die Leitung 6.1 mit Gefälle über ein als Nachfilter eingesetztes Schwerkraftfilter 8 geleitet, welcher nur dann seine Filteraufgaben wahrnehmen soll, wenn in dem Flotationsapparat 6 der Trennschnitt nicht genau eingehalten werden kann und Feststoffe in das an sich geklärte Betriebswasser übertreten. Im Anschluß an den Schwerkraftfilter 8 wird das geklärte Betriebswasser in eine Kühlturmanlage 9 geleitet, in der das Wasser versprüht wird, sich abkühlt und in dem darunter angeordneten Pumpenvorlagebecken 10 gesammelt wird. Bei diesem Kühlprozeß wird das im Kühlturm versprühte Wasser auf die erforderliche Betriebstemperatur zurückgekühlt. Aus dem Pumpenvorlagebecken 10 wird das gereinigte Betriebswasser W₂ mittels der Pumpe 11 und Leitung 17 wieder zu den Verbrauchern in der Walzwerksanlage zurückgefördert.

Der aus dem Betriebswasser in dem Flotationsapparat zu 90 bis 95% abgetrennte feine bis feinste Walzenzunder mit einer Partikelgröße zwischen 0,001 mm bis 0,5 mm wird im Unterlauf 6.2 des Flotationsapparates gesammelt und wird von dort einer Mühle 12 zugefördert. In der Mühle wird der ölhaltige Walzenzunder aufgemahlen und dabei u.a. Scherkräften ausgesetzt. Das hierbei erzeugte Produkt gelangt in ein mit Wasser angereichertes Suspensionsbecken, in welchem sich die Ölphase von den Walzenzunderpartikeln erneut ablösen soll. Mit Hilfe einer Verdrängerpumpe 14 und einer Rohrleitung 15 wird die Suspension in einen zweiten Flotationsapparat 16 zwecks Nachflotation eingeleitet. In dem Flotationsapparat 16 wird die Suspension in einem zu dem Flotationsapparat 6 beschriebenen Prozeß in drei Fraktionen getrennt. Das dabei anfallende Ölkonzentrat wird über eine Rohrleitung 16.1 dem Separator 7 zugeführt und wird in dem Separator wie zuvor beschrieben in Altöl, Wasser und geringste Anteile an feinstem Walzenzunder getrennt. Das in dem Flotationsapparat 16 geklärte Wasser wird über eine Rohrleitung 16.1 mittels Schwerkraft dem Pumpenvorlagebecken 2 zugeführt. Diese Wassermenge, die der Verlustwassermenge entsprechen kann, wird also in den Wasseraufbereitungskreislauf zurückgeführt. Der im Unterlauf 16.2 des Flotationsapparates 16 aus der Suspension abgetrennte feinste und ölarme Walzenzunder Z₃ wird dort abgezogen und gelangt zusammen mit dem übrigen Walzenzunder Z₁ aus dem Sedimentationsbecken 1 und dem Walzenzunder Z₂ aus dem Pumpenvorlagebecken 2 auf das Sinterband 19 und von dort in die Verhüttungsanlage 21 nach der Entwässerung im Entwässerungsbecken 20.

Mit dem beschriebenen Verfahren und der zugehörigen Anlage zur Aufbereitung des in Walzwerken anfallenden stark verschmutzen Betriebswassers kann also nicht nur der in erheblichen Mengen anfallende Walzenzunder einer wirtschaftlichen Nutzung zugeführt werden, sondern auch das beim Walzprozeß in deutlichen Mengen verwendete Schmieröl und Schmierfett kann als Altöl zurückgewonnen werden und einer weiteren Verwendung zugeführt werden. Besonders hervorzuheben ist, daß das Deponie- und Entsorgungsproblem von ölhaltigen Walzenzunderschlämmen, wie sie bei herkömmlichen Betriebswasser-Aufbereitungsverfahren anfallen, bei Durchführung des erfindungsgemäßen Verfahrens erst gar nicht aufkommt.

### Bezugszeichenübersicht

- 1: Sedimentationsbecken
- 2: Pumpenvorlagebecken
- 3: Magnetscheider
- 4: Pumpe
- 5: Leitung/Rohrleitung
- 6: Flotationsapparat
- 6.1, 6.2., 6.3: Fraktionsausgänge/Leitungen
- 7: Separator
- 8: Schwerkraftfilter
- 9: Kühlturm
- 10: Pumpenvorlagebecken
- 11: Pumpe
- 12: Mühle
- 13: Suspensionsbecken
- 14: Verdrängerpumpe
- 15: Leitung/Rohrleitung
- 16: Nachflotationsapparat
- 16.1, 16.2, 16.3: Fraktionsausgänge/Leitungen
- 17: Leitung/Rohrleitung
- 18: Greifer eines Krans
- 19: Förderband
- 20: Entwässerungsbecken
- 21: Verhüttungsanlage
- 22: Anlage zur Altölaufbereitung

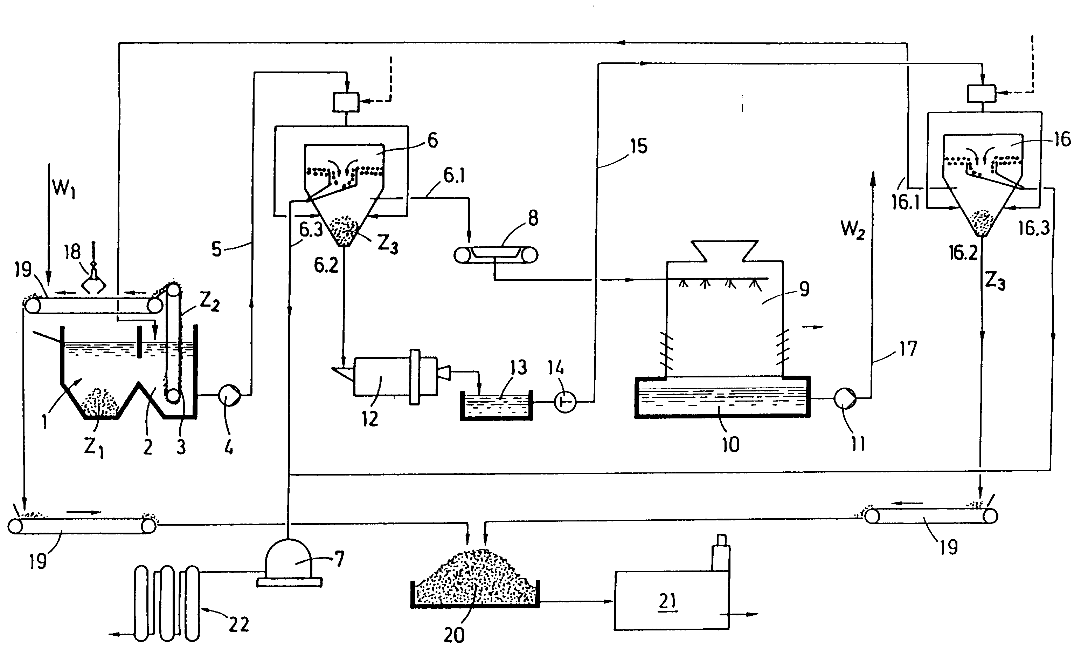

## Patentansprüche

1. Verfahren zur Aufbereitung von ölhaltigem mit Walzenzunder verschmutztem Betriebswasser offener Kühlkreisläufe einer Walzwerksanlage, wobei eine Magnetscheidung von Walzenzunder aus dem Betriebswasser sowie eine Drei-Stofftrennung in Flotationsstufen vorgesehen ist,
**dadurch gekennzeichnet**,
daß der grobe Walzenzunder (Z1) mittels Schwerkraft-Sedimentation von dem verunreinigten Betriebswasser (W1) getrennt wird, daß aus dem auf diese Weise vorgeklärten Betriebswasser die mittleren und feinen Walzenzunderteilchen (Z2) mittels Magnetscheidung (3) entfernt werden,
daß das demgemäß nachgeklärte Betriebswasser (5) mittels Flotation (6) in Fraktionen getrennt wird, enthaltend Ölkonzentrat (6.3), Wasser (6.1) und ölarme feinste Walzenzunderpartikel (Z3) und
daß die bei der Flotation (6) abgetrennten ölarmen Walzenzunderpartikel (Z3) aufgemahlen (12) werden, in Wasser (13) suspendiert werden und die Suspension (15) mittels Nachflotation (16) in Fraktionen getrennt wird, enthaltend Ölkonzentrat (16.3), Wasser (16.1) und feinste Walzenzunderpartikel (Z3) und
daß die einzelne Fraktion wie geklärtes Betriebswasser (W2) als Kühlmittel wieder verwendet wird, der gesamte aus dem Betriebswasser (W1) abgetrennte Walzenzunder (Z1, Z2, Z3) als Sinter verhüttet wird und das ölhaltige Konzentrat (6.3, 16.3) entweder verworfen oder einer Altölaufbereitung (7, 22) unterzogen wird.

2. Verfahren nach Anspruch 1,
**dadurch gekennzeichnet,**
daß das bei der Flotation (6) erhaltene Klarwasser (6.1) gegebenenfalls gefiltert (8) und anschließend in einem Kühlturm (9) versprüht, gesammelt (10) und an die Verbraucherstellen in der Walzwerksanlage zurückgeführt wird.

3. Verfahren nach Anspruch 1 oder 2,
**dadurch gekennzeichnet**
daß das bei der Nachflotation (16) der Suspension (15) erhaltene Klarwasser (16.1) in den Aufbereitungskreislauf, vorzugsweise in das zur Magnetscheidung (3) vorgeklärte Betriebswasser zurückgeführt wird.

4. Verfahren nach Anspruch 1, 2 oder 3,
**dadurch gekennzeichnet,**
daß die in der Nachflotation (16) aus der Suspension (15) abgetrennten Walzenzunderpartikel (Z3) verhüttet werden, gegebenenfalls zusammen mit dem in den ersten Verfahrensstufen vom Betriebswasser (W1) mittels Sedimentation (1) und Magnetscheidung (3) abgetrennten groben Walzenzunder bzw. Walzenzunderteilchen (Z2).

5. Verfahren nach einem der Ansprüche 1 bis 4,
**dadurch gekennzeichnet,**
daß das ölhaltige Konzentrat (6.3) aus der Vorflotation (6) des Betriebswassers (W1) und das ölhaltige Konzentrat (16.3) aus der Nachflotation (16) der Suspension (15) in mehrere Stoffphasen separiert werden, insbesondere in die Fraktionen Altöl (6.3, 16.3), Wasser (W2, 16.1) und geringe Anteile an Walzenzunder (Z3) getrennt werden.

6. Vorrichtung zur Aufbereitung von ölhaltigem mit Walzenzunder verschmutztem Betriebswasser offener Kühlkreisläufe einer Walzwerksanlage, wobei ein Magnetscheider (3) für Walzenzunder sowie mindestens ein Flotationsapparat (6) für eine Drei-Stofftrennung vorgesehen ist,
**gekennzeichnet durch**
ein Absetzbecken (1) für die Zuführung von gebrauchtem und verunreinigtem Betriebswasser (W1) sowie durch eine Einrichtung (18) zur Entnahme sedimentierten groben Walzenzunders und eine Vorrichtung zur Überleitung des vorgeklärten Betriebswassers in ein Pumpenvorlagebecken (2) mit darin installiertem Magnetscheider (3) für mittlere und feine Walzenzunderpartikel (Z2) sowie
eine Vorrichtung (4, 5) zur Überleitung des nachgeklärten Betriebswassers in mindestens einen Flotationsapparat (6) mit Zwangsbelüftung, deren Fraktionsausgänge mit Transportmitteln versehen sind zur Rückführung der fraktionierten Produkte wie gereinigtes Betriebswasser (W2) in den Kühlkreislauf, wobei der Fraktionsausgang (6.2) des Flotationsapparates (6) für abgetrennte Walzenzunderpartikel (Z3) mit einer Zerkleinerungsmaschine (12), insbesondere mit einer Mühle verbunden ist, deren Produktausgang mit einem Suspensionsbecken (13) in Verbindung steht, dessen Suspensionsleitung (15) zu einem zweiten Flotationsapparat (16) mit Zwangsbelüftung geführt ist und
Vorrichtungen vorgesehen sind zur Weitergabe des abgetrennten Walzenzunders (Z1, Z2, Z3) in eine Verhüttungsanlage (21) und zur Weiterleitung des ölhaltigen Konzentrats zu einer Altölaufbereitung (22).

7. Vorrichtung nach Anspruch 6,
**dadurch gekennzeichnet,**
daß der Fraktionsausgang (6.1) des Flotationsapparates (6) für geklärtes Betriebswasser gegebenenfalls mit einem Filter (8) verbunden ist, dessen Filtratausgang mit einem Kühlturm (9) verbunden ist mit darunter angeordnetem Pumpenvorlagebecken (10), dessen Pumpe (11) mittels Verbindungsleitung (17) mit den Kühlwasserverbrauchern in der Walzwerksanlage in Verbindung steht.

8. Vorrichtung nach Anspruch 6 oder 7,
**dadurch gekennzeichnet,**
daß der Fraktionsausgang (16.1) des zweiten Flotationsapparates (16) für Reinwasser mit dem Pumpenvorlagebecken (2) für Magnetabscheidung (3) verbunden ist.

9. Vorrichtung nach Anspruch 6, 7 oder 8,
**dadurch gekennzeichnet,**
daß der Fraktionsausgang (16.2) des zweiten Flotationsapparates (16) für Walzenzunderpartikel (Z3) mit Transportmitteln (19) zur Weitergabe des abgetrennten Walzenzunders in eine Verhüttungsanlage (21) verbunden ist.

10. Vorrichtung nach einem der Ansprüche 6 bis 9,
**dadurch gekennzeichnet,**
daß der Fraktionsausgang (6.3, 16.3) für das ölhaltige Konzentrat des ersten Flotationsapparates (6) und/oder des zweiten Flotationsapparates (16) mit einer Zentrifuge (7), insbesondere mit einem Drei-Phasen-Separator mit Austragsöffnung für gereinigtes Wasser, Altöl sowie Feststoff verbunden ist.

## Claims

1. Method for the preparation of operating water, which contains oil and is contaminated with rolling scale, of open cooling circuits of a rolling mill, wherein a magnetic separation of rolling scale from the operating water as well as a three-substance separation in flotation stages are provided, characterised thereby that the coarse rolling scale (Z1) is separated from the uncleaned operating water (W1) by means of gravity sedimentation, that the average and fine rolling scale particles (Z2) are removed by means of magnetic separation (3) from the operating water clarified in this manner, that the operating water (5) reclarified according to that is separated by means of flotation (6) into fractions containing oil concentrate (6, 3), water (6.1) and finest rolling scale particles (Z3) low in oil, that the rolling scale particles (Z3) low in oil and separated in the flotation (6) are ground (12) and suspended in water (13) and the suspension (15) is separated by means of reflotation (16) into fractions containing oil concentrate (16.3), water (16.1) and finest rolling scale particles (Z3), and that the individual fraction like clarified operating water (W2) is used again as coolant, the rolling scale (Z1, Z2, Z3) completely separated out of the operating water is smelted as sinter and the oil-containing concentrate (6.3, 16.3) is either discarded or subjected to a used-oil processing (7, 22).

2. Method according to claim 1, characterised thereby that the clean water (6.1) obtained in the flotation (6) is optionally filtered (8) and subsequently sprayed in a cooling tower (9), collected (10) and returned to the consumer locations in the rolling mill.

3. Method according to claim 1 or 2, characterised thereby that the clean water (16.1) obtained in the reflotation (16) of the suspension (15) is returned into the preparation circuit, preferably into the operating water preliminarily clarified for the magnetic separation (3).

4. Method according to claim 1, 2 or 3, characterised thereby that the rolling scale particles (Z3) separated out from the suspension (15) in the reflotation (16) are smelted, optionally together with the coarse rolling scale or rolling scale particles (Z2) separated out from the operating water (W1) in the first method steps by means of sedimentation (1) and magnetic separation (3).

5. Method according to one of claims 1 to 4, characterised thereby that the oil-containing concentrate (6.3) from the preliminary flotation (6) of the operating water (W1) and the oil-containing concentrate (16.3) from the reflotation (16) of the suspension (15) are separated into several substance phases, particularly into the fractions used oil (6.3, 16.3), water (W2, 16.1) and small components of rolling scale (Z3).

6. Device for the separation of operating water, which contains oil and is contaminated with rolling scale, of open cooling circuits of a rolling mill, wherein a magnetic separator (3) for rolling scale as well as at least one flotation apparatus (6) for a three-substance separation are provided, characterised by a settling tank (1) for the feed of used and uncleaned operating water (W1) as well as by an equipment (18) for removal of sedimented coarse rolling scale and a device for conducting over the preliminarily clarified operating water into a pump preliminary deposition tank (2) with magnetic separator (3) installed therein for average and fine rolling scale particles (Z2), as well as a device (4, 5) for conducting over the reclarified operating water into at least one flotation apparatus (6) with pressure air cooling, the fraction outlets of which are provided with transport means for the return of the fractionated products like cleaned operating water (W2) into the cooling circuit, wherein the fraction outlet (6.2) of the flotation apparatus (6) for separated rolling scale particles (Z3) is connected with a comminuting machine (12), especially with a mill, the product outlet of which stands in connection with a suspension tank (13), the suspension duct (15) of which is led to a second flotation apparatus (16) with pressure air cooling, and devices are provided for the passing on of the separated rolling scale (Z1, Z2, Z3) into a smelting installation (21) and for the forwarding on of the oil-containing concentrate to a used oil processing device (22).

7. Device according to claim 6, characterised thereby that the fraction outlet (6.1) of the flotation apparatus (6) for clarified operating water is optionally connected with a filter (8), the filter outlet of which is connected with a cooling tower (9) with pump preliminary deposition tank (10) which is arranged thereunder and the pump (11) of which stands in connection by means of a connecting duct (17) with the cooling water consumers in the rolling mill plant.

8. Device according to claim 6 or 7, characterised thereby that the fraction outlet (16.1) of the second flotation apparatus (16) for clean water is connected with the pump preliminary deposition tank (2) for magnetic separation (3).

9. Device according to claim 6, 7 or 8, characterised thereby that the fraction outlet (16.2) of the second flotation apparatus (16) for rolling scale particles (Z3) is connected with transport means (19) for the transfer of the separated out rolling scale into a smelting installation (21).

10. Device according to one of claims 6 to 9, characterised thereby that the fraction outlet (6.3, 16.3) for the oil-containing concentrate of the first flotation apparatus (6) and/or of the second flotation apparatus (16) is connected with a centrifuge (7), especially with a three-phase separator with discharge opening for cleaned water, used oil as well as solids.

## Revendications

1. Procédé de traitement de l'eau chargée d'huile et polluée de calamine de laminage dans des circuits de refroidissement ouverts d'une installation de laminage, dans lequel on prévoit une séparation magnétique de la calamine hors de l'eau, ainsi qu'une séparation triple de matières dans des étages de flottaison,
caractérisé en ce que :
la calamine grossière (Z1) est séparée par sédimentation par gravité hors de l'eau polluée (W1), en ce que l'on enlève de cette eau clarifiée de cette manière les particules fines et moyennes de calamine (Z2) au moyen d'une séparation magnétique (3),
en ce que l'eau ainsi purifiée (5) est séparée par flottaison (6) en fractions, qui contiennent un concentré en huile (6.3), de l'eau (6.1), et de très fines particules de calamine pauvres en huile (Z3),
en ce que les particules de calamine pauvres en huile (Z3) qui sont séparées lors de la flottaison (6) sont moulues (12), mises en suspension dans de l'eau (13), et la suspension (15) est séparée au moyen d'une flottaison postérieure (16) en fractions qui comprennent un concentré en huile (16.3), de l'eau (16.1) et de très fines particules de calamine (Z3), et
en ce que la fraction individuelle qu'est l'eau purifiée (W2) est utilisée à nouveau comme agent de refroidissement, la totalité de la calamine (Z1, Z2, Z3) séparée de l'eau (W1) est traitée par voie métallurgique comme produit de frittage, et le concentré contenant de l'huile (6.3, 16.3) est soit rejeté soit soumis à un traitement de recyclage d'huile (7, 22).

2. Procédé selon la revendication 1, caractérisé en ce que l'eau purifiée (6.1) obtenue lors de la flottaison (6) est en option filtrée (8) et ensuite pulvérisée dans une tour de refroidissement (9), recueillie (10) et retournée aux emplacements d'utilisation dans l'installation de laminage.

3. Procédé selon l'une ou l'autre des revendications 1 et 2, caractérisé en ce que l'eau purifiée (16.1) obtenue lors de la flottaison postérieure (16) de la suspension (15) est retournée dans le circuit de préparation, de préférence dans l'eau pré-purifiée pour la séparation magnétique (3).

4. Procédé selon l'une des revendications 1, 2 et 3, caractérisé en ce que les particules de calamine (Z3) séparées hors de la suspension (15) dans la flottaison postérieure (16) sont traitées par voie métallurgique, le cas échéant ensemble avec les particules de calamine grossière (Z2) séparées de l'eau (W1) dans le premier étage de traitement au moyen d'une sédimentation (1) et d'une séparation magnétique (3).

5. Procédé selon l'une des revendications 1 à 4, caractérisé en ce que le concentré contenant de l'huile (6.3) provenant de la flottaison préliminaire (6) de l'eau (W1), et le concentré contenant de l'huile (16.3) provenant de la flottaison postérieure (16) de la suspension (15) sont séparés en plusieurs phases de matières, en particulier dans les fractions- que sont l'huile usée (6.3, 16.3), l'eau (W2, 16.1), et de faibles proportions de calamine (Z3).

6. Dispositif pour la préparation d'eau contenant de l'huile et polluée de calamine dans des circuits de refroidissement ouverts d'une installation de laminage, dans lequel on prévoit un séparateur magnétique (3) pour la calamine, ainsi qu'au moins un appareil de flottaison (6) pour une séparation triple de matières,
caractérisé par :
- un bassin de décantation (1) pour l'amenée de l'eau utilisée et polluée (W1) ainsi que par des moyens (18) pour l'enlèvement de la calamine grossière sédimentée, et un dispositif pour le transfert de l'eau pré-purifiée jusque dans un bassin de réserve de pompage (2) dans lequel est installé un séparateur magnétique (3) pour des particules moyennes et fines de calamine (Z2),
- ainsi qu'un dispositif (4, 5) pour le transfert de l'eau ayant subi une purification postérieure dans au moins un appareil de flottaison (6) avec aération forcée, dont les sorties de fractions sont pourvues de moyens de transport pour le retour de la fraction de produit qu'est l'eau purifiée (W2) dans le circuit de refroidissement,
- la sortie de fraction (6.2) de l'appareil de flottaison (6) pour les particules de calamine séparées (Z3) est reliée à une machine de broyage (12), en particulier un moulin, dont la sortie de produit est reliée à un bassin de suspension (13), dont la conduite de suspension (15) est menée vers un second appareil de flottaison (16) à aération forcée, et
- dans lequel sont prévus des dispositifs pour le transfert de la calamine séparée (Z1, Z2, Z3) dans une installation de traitement métallurgique (21) et pour le transfert du concentré contenant de l'huile vers une installation de traitement d'huile usée (22).

7. Dispositif selon la revendication 6, caractérisé en ce que la sortie de fraction (6.1) de l'appareil de flottaison (6) pour l'eau purifiée est en option reliée à un filtre (8) dont la sortie de filtrat est reliée à une tour de refroidissement (9) avec un bassin de réserve de pompage (10) agencé- au-dessous, dont la pompe (11) est reliée au moyen de conduites de liaison (17) aux emplacements d'utilisation d'eau de refroidissement dans l'installation de laminage.

8. Dispositif selon l'une ou l'autre des revendications 6 et 7, caractérisé en ce que la sortie de fraction (16.1) du second appareil de flottaison (16) pour l'eau purifiée est reliée au bassin de réserve de pompage (2) pour la séparation magnétique (3).

9. Dispositif selon l'une des revendications 6, 7 et 8, caractérisé en ce que la sortie de fraction (16.2) du second appareil de flottaison (16) pour les particules de calamine (Z3) est reliée à des moyens de transport (19) pour le transfert de la calamine séparée jusque dans une installation de traitement métallurgique (21).

10. Dispositif selon l'une des revendications 6 à 9, caractérisé en ce que la sortie de fraction (6.3, 16.3) pour le concentré contenant de l'huile provenant du premier appareil de flottaison (6) et/ou du second appareil de flottaison (16) est reliée à un dispositif centrifuge (7), en particulier un séparateur à trois phases qui présente des ouvertures de sortie pour l'eau purifiée, pour l'huile utilisée, ainsi que pour les particules solides.
